# EUROPEAN PATENT APPLICATION

(11) **EP 4 624 905 A1**
(43) Date of publication of application: **01.10.2025**
(21) Application number: 25156732.7
(22) Date of filing: 10.02.2025
(51) Int. Cl.: G01N 21/75, G01N 21/3577, G01N 21/85, G01N 21/359, G01N 21/33, G01N 21/64, G01N 21/65

(54) **APPARATUS, METHOD AND PROGRAM FOR PREDICTING THE STATE OF A FLUID**

(30) Priority: 27.03.2024 JP 2024050862
(71) Applicant: Yokogawa Electric Corporation, Tokyo 180-8750 (JP)
(72) Inventor: HATTORI, Yusuke, Musashino-shi, Tokyo, 180-8750 (JP); SAWADA, Takeshi, Musashino-shi, Tokyo, 180-8750 (JP)
(74) Representative: Hoffmann Eitle

(57) **Abstract**

Provided is an apparatus (10) comprising: a detection unit (200: 180, 182, 186, 188, 190, 192, 194, 196) that detects a fluid spectrum which is a spectrum of light indicating a state of a fluid flowing through a flow channel (104, 114, 124, 134, 142, 152, 162), a derivative unit (210) that differentiates the fluid spectrum to derive a derivative spectrum; an extraction unit (240) that extracts a first solvent spectrum by principal component analysis for a solvent of the fluid, a calculation unit (250) that calculates a difference spectrum between the derivative spectrum and the first solvent spectrum and a prediction unit (270) that predicts a state of the fluid by using data regarding a peak of the difference spectrum calculated.

## Description

### BACKGROUND

### 1. TECHNICAL FIELD

The present invention relates to an apparatus, a method and a program.

### 2. RELATED ART

Patent Document 1 and 2 describes "an optical analysis system and optical analysis method that can non-destructively analyze information about optical isomerism of a product material synthesized in a chemical reaction system with no need for extracting samples".

### Prior Art Document

### Patent Document

Patent Document 1: Japanese Patent No. 7087696
Patent Document 2: Japanese Patent No. 7192473

### SUMMARY

In the first aspect of the present invention, there is provided an apparatus, comprising: a detection unit that detects a fluid spectrum which is a spectrum of light indicating a state of a fluid flowing through a flow channel; a derivative unit that differentiates the fluid spectrum to derive a derivative spectrum; an extraction unit that extracts a first solvent spectrum by principal component analysis for a solvent of the fluid; a calculation unit that calculates a difference spectrum between the derivative spectrum and the first solvent spectrum; and a prediction unit that predicts a state of the fluid by using data regarding a peak of the difference spectrum calculated by the calculation unit. The derivative unit may second-order differentiate the fluid spectrum to derive the derivative spectrum.

The above-described apparatus may further comprise: a generation unit that generates, by using the difference spectrum, a model which predicts a state of a fluid in response to an input of data regarding a peak of a difference spectrum of the fluid, wherein the prediction unit may input data regarding a peak of the difference spectrum into the model to predict a state of the fluid. The prediction unit may input, into the state prediction model, an intensity of a peak of the difference spectrum or a wavenumber at which a peak of the difference spectrum has appeared in a predetermined wavenumber range corresponding to the target substance of reaction, to predict a state of the fluid.

Any of the above-described apparatuses may further comprise an acquisition unit that acquires a second solvent spectrum corresponding to the solvent, wherein the extraction unit may extract the first solvent spectrum from the derivative spectrum by the principal component analysis by using the second solvent spectrum.

In the above-described apparatus, the acquisition unit may acquire the second solvent spectrum which corresponds to a pH or a temperature of the fluid, and the extraction unit may extract the first solvent spectrum from the derivative spectrum by the principal component analysis by using the second solvent spectrum.

In the above-described apparatus, the acquisition unit may estimate a pH or a temperature of the fluid and acquire the second solvent spectrum which corresponds to the pH or the temperature estimated.

In the above-described apparatus, the acquisition unit may estimate a pH or a temperature of the fluid based on a peak corresponding to water or a solvent in the fluid in the fluid spectrum and acquire the second solvent spectrum which corresponds to the pH or the temperature estimated. The acquisition unit may estimate the pH or the temperature of the fluid from at least one of the occurrence wavenumber or the intensity of the peak corresponding to water or the organic solvent in a predetermined wavenumber range in the fluid spectrum.

Any of the above-described apparatuses may further comprise a storage unit that stores a plurality of second solvent spectra respectively corresponding to a plurality of pHs or a plurality of temperatures, wherein the acquisition unit may acquire, from the storage unit, the second solvent spectrum which corresponds to a pH or a temperature of the fluid among the plurality of second solvent spectra.

In any of the above-described apparatuses, the acquisition unit may acquire the second solvent spectrum in which a peak has been corrected according to a pH or a temperature of the fluid.

In any of the above-described apparatuses, the prediction unit may predict, as a state of the fluid, a reaction amount of a reaction in the fluid by using data regarding a peak of the difference spectrum. The prediction unit may predict a plurality of reaction amounts from the plurality of difference spectra, respectively, and calculate the reaction rate from the plurality of reaction amounts.

In the above-described apparatus, the prediction unit may predict a residual amount of a material in the fluid by using data regarding a peak of the difference spectrum.

The above-described apparatus may further comprise: an abnormality determination unit that determines that a reaction of the fluid is proceeding, if the residual amount of the material in the fluid predicted by the prediction unit is less than a predetermined threshold.

In the second aspect of the present invention, there is provided a method comprising: detecting a fluid spectrum which is a spectrum of light indicating a state of a fluid flowing through a flow channel; differentiating the fluid spectrum to derive a derivative spectrum; extracting a first solvent spectrum by principal component analysis for a solvent of the fluid; calculating a difference spectrum between the derivative spectrum and the first solvent spectrum; and predicting a state of the fluid by using data regarding a peak of the difference spectrum calculated.

In the third aspect of the present invention, there is provided a program which is executed by a computer and causes the computer to function as: a detection unit that detects a fluid spectrum which is a spectrum of light indicating a state of a fluid flowing through a flow channel; a derivative unit that differentiates the fluid spectrum to derive a derivative spectrum; an extraction unit that extracts a first solvent spectrum by principal component analysis for a solvent of the fluid; a calculation unit that calculates a difference spectrum between the derivative spectrum and the first solvent spectrum; and a prediction unit that predicts a state of the fluid by using data regarding a peak of the difference spectrum calculated.

Note that the summary clause does not necessarily describe all necessary features of the embodiments of the present invention. The present invention may also be a sub-combination of the features described above.

### BRIEF DESCRIPTION OF THE DRAWINGS

Fig. 1 is a schematic view of a reaction system 10 according to the present embodiment.
Fig. 2 shows a block diagram of a control apparatus 30.
Fig. 3 shows an exemplary flow of a second-solvent-spectrum detection operation of the reaction system 10.
Fig. 4 shows an exemplary flow of a reaction operation of the reaction system 10.
Fig. 5 shows a descriptive drawing of an exemplary database that stores the second solvent spectrum.
Fig. 6 shows a descriptive drawing of another exemplary database that stores the second solvent spectrum.
Fig. 7 shows a descriptive drawing of an exemplary derivative spectrum.
Fig. 8 shows a descriptive drawing of an exemplary first solvent spectrum.
Fig. 9 shows a descriptive drawing of an exemplary difference spectrum.
Fig. 10 shows an exemplary computer 2200 in which a plurality of aspects of the present invention may be embodied in whole or in part.

### DESCRIPTION OF EXEMPLARY EMBODIMENTS

The present invention will be described below through embodiments of the invention, but the following embodiments do not limit the invention according to the claims. In addition, not all of the combinations of features described in the embodiments are essential to the solution of the invention.

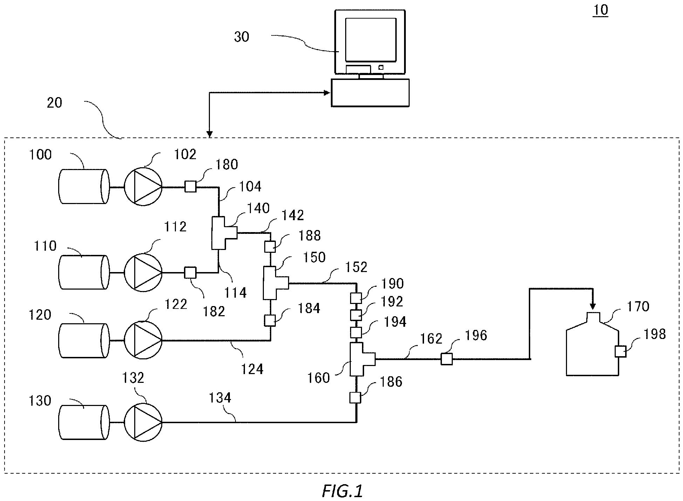

Fig. 1 is a schematic view of a reaction system 10 according to the present embodiment. The reaction system 10 generates a target substance such as peptide. The reaction system 10 includes a reaction apparatus 20 and a control apparatus 30.

The reaction apparatus 20 is connected to the control apparatus 30. As an example, the reaction apparatus 20 may be a flow reactor, such as a micro flow reactor, that generates a target substance by flow synthesis or the like. The reaction apparatus 20 includes a first material tank 100, a first pump 102, a first liquid-delivery tube 104, a second material tank 110, a second pump 112, a second liquid-delivery tube 114, a third material tank 120, a third pump 122, a third liquid-delivery tube 124, a fourth material tank 130, a fourth pump 132, a fourth liquid-delivery tube 134, a first mixer 140, a first reaction tube 142, a second mixer 150, a second reaction tube 152, a third mixer 160, a third reaction tube 162, a target substance tank 170, a first sensor unit 180, a second sensor unit 182, a third sensor unit 184, a fourth sensor unit 186, a fifth sensor unit 188, a sixth sensor unit 190, a seventh sensor unit 192, an eighth sensor unit 194, a ninth sensor unit 196, and a tenth sensor unit 198. Note that, in the following description, one or more of the first sensor unit 180, the second sensor unit 182, the third sensor unit 184, the fourth sensor unit 186, the fifth sensor unit 188, the sixth sensor unit 190, the seventh sensor unit 192, the eighth sensor unit 194, the ninth sensor unit 196, or the tenth sensor unit 198 are simply referred to as a sensor unit or a plurality of sensor units. The liquid-delivery tubes and the reaction tubes in the reaction apparatus 20 form flow channels from the material tanks to the target substance tank 170.

The first material tank 100 is connected to the first mixer 140 via the first pump 102 and the first liquid-delivery tube 104. The first material tank 100 accommodates a solvent including the first material such as amino acid. The first pump 102 supplies the solvent including the first material from the first material tank 100 to the first liquid-delivery tube 104 at a flow speed or a flow volume according to a preset reaction condition. The first liquid-delivery tube 104 has a flow channel formed therein. The first liquid-delivery tube 104 may be a through hole formed in a board-shaped cell or a tube made of metal or resin. A first material fluid, which is the solvent including the first material, flows into one of the inlets of the first mixer 140 through a flow channel of the first liquid-delivery tube 104.

The second material tank 110 is connected to the first mixer 140 via the second pump 112 and the second liquid-delivery tube 114. The second material tank 110 accommodates a solvent including the second material. The second pump 112 supplies the solvent including the second material from the second material tank 110 to the second liquid-delivery tube 114 at a flow speed or a flow volume according to a preset reaction condition. The second liquid-delivery tube 114 has a flow channel formed therein. The second liquid-delivery tube 114 may be a through hole formed in a board-shaped cell or a tube made of metal or resin. The second material fluid, which is the solvent including the second material, flows into another of the inlets of the first mixer 140 through a flow channel of the second liquid-delivery tube 114.

The third material tank 120 is connected to the second mixer 150 via the third pump 122 and the third liquid-delivery tube 124. The third material tank 120 accommodates a solvent including the third material. The third pump 122 supplies the solvent including the third material from the third material tank 120 to the third liquid-delivery tube 124 at a flow speed or a flow volume according to a preset reaction condition. The third liquid-delivery tube 124 has a flow channel formed therein. The third liquid-delivery tube 124 may be a through hole formed in a board-shaped cell or a tube made of metal or resin. The third material fluid, which is the solvent including the third material, flows into one of the inlets of the second mixer 150 through a flow channel of the third liquid-delivery tube 124.

The fourth material tank 130 is connected to the third mixer 160 via the fourth pump 132 and the fourth liquid-delivery tube 134. The fourth material tank 130 accommodates a solvent including the fourth material. The fourth pump 132 supplies the solvent including the fourth material from the fourth material tank 130 to the fourth liquid-delivery tube 134 at a flow speed or a flow volume according to a preset reaction condition. The fourth liquid-delivery tube 134 has a flow channel formed therein. The fourth liquid-delivery tube 134 may be formed of metal or resin and may be a tube or a through hole formed in a board-shaped cell. The fourth material fluid, which is the solvent including the fourth material, flows into one of the inlets of the third mixer 160 through a flow channel of the fourth liquid-delivery tube 134. Here, the first material, the second material, the third material, and the fourth material may be different materials from each other, and the solvents may be the same type with or different types from each other.

An outlet of the first mixer 140 is connected to one end of the first reaction tube 142. The first mixer 140 may be a static mixer such as a T-shaped mixer or a Y-shaped mixer. The first mixer 140 mixes, in its inside, the first material fluid and the second material fluid flowing in from the two inlets and discharges the mixture as the first reaction fluid to the first reaction tube 142.

Another end of the first reaction tube 142 is connected to the second mixer 150. The first reaction tube 142 may be a through hole formed in a board-shaped cell or a tube made of metal or resin. The first reaction fluid flows through the flow channel inside the first reaction tube 142 and is discharged to another of the inlets of the second mixer 150. A reaction of the first reaction fluid proceeds while the first reaction fluid flows through the first reaction tube 142, and an intermediate target substance is generated by the reaction. A reaction portion in which the reaction proceeds in the first reaction tube 142 may have a length, a width, or a shape that is set to adjust the reaction conditions such as reaction time.

An outlet of the second mixer 150 is connected to one end of the second reaction tube 152. The second mixer 150 may be a static mixer such as a T-shaped mixer or a Y-shaped mixer. The second mixer 150 mixes, in its inside, the first reaction fluid and the third material fluid flowing in from the two inlets and discharges the mixture as the second reaction fluid to the second reaction tube 152.

Another end of the second reaction tube 152 is connected to the third mixer 160. The second reaction tube 152 may be a through hole formed in a board-shaped cell or a tube made of metal or resin. The second reaction fluid flows through the flow channel inside the second reaction tube 152 and is discharged to another of the inlets of the third mixer 160. A reaction of the second reaction fluid proceeds while the second reaction fluid flows through the second reaction tube 152, and an intermediate target substance is generated by the reaction. A reaction portion in which the reaction proceeds in the second reaction tube 152 may have a length, a width, or a shape that is set to adjust the reaction conditions such as reaction time.

An outlet of the third mixer 160 is connected to one end of the third reaction tube 162. The third mixer 160 may be a static mixer such as a T-shaped mixer or a Y-shaped mixer. The third mixer 160 mixes, in its inside, the second reaction fluid and the fourth material fluid flowing in from the two inlets and discharges the mixture as the third reaction fluid to the third reaction tube 162.

Another end of the third reaction tube 162 is connected to the target substance tank 170. The third reaction tube 162 may be a through hole formed in a board-shaped cell or a tube made of metal or resin. The third reaction fluid flows through the flow channel inside the third reaction tube 162 and is discharged into the target substance tank 170. A reaction of the third reaction fluid proceeds while the third reaction fluid flows through the third reaction tube 162, and a final target substance by the reaction is generated. A reaction portion in which the reaction proceeds in the third reaction tube 162 may have a length, a width, or a shape that is set to adjust the reaction conditions such as reaction time.

The target substance tank 170 accommodates the third reaction fluid discharged from the third reaction tube 162. Note that, between the third reaction tube 162 and the target substance tank 170, an apparatus, such as a filter, may be arranged to separate the by-products and the final target substance from the third reaction fluid to extract the final target substance.

The first sensor unit 180 is arranged in the first liquid-delivery tube 104 and detects a state of the fluid in the first liquid-delivery tube 104. The first sensor unit 180 may detect at least one of a spectrum of light, a pressure, a flow speed, a flow volume, a pH, or a temperature of the fluid in the first liquid-delivery tube 104. The first sensor unit 180 may include at least one of an ultraviolet spectrometer, a visible spectrometer, a near-infrared spectrometer, an infrared spectrometer to detect an absorption spectrum of the fluid, or a fluorescence spectrometer to detect an emission spectrum of the fluid, or a Raman spectrometer to detect a Raman scattering light of the fluid. Here, the light absorption and emission spectra of the fluid may be the light absorption, emission, and Raman spectra in the ultraviolet region (10 nm to 380 nm), the visible region (380 nm to 800 nm), the near-infrared region (wavelength 800 nm to 2500 nm), or infrared region (wavelength 2500 nm to 25000 nm), and the same applies in the following. In addition, only the absorption spectrum will be described below.

The second sensor unit 182 is arranged in the second liquid-delivery tube 114 and detects a state of the fluid in the second liquid-delivery tube 114. The second sensor unit 182 may detect at least one of a spectrum of light, a pressure, a flow speed, a flow volume, a pH, or a temperature of the fluid in the second liquid-delivery tube 114. The second sensor unit 182 may have a similar configuration and may perform a similar operation to the first sensor unit 180.

The third sensor unit 184 is arranged in the third liquid-delivery tube 124 and detects a state of the fluid in the third liquid-delivery tube 124. The third sensor unit 184 may detect at least one of a spectrum of light, a pressure, a flow speed, a flow volume, a pH, or a temperature of the fluid in the third liquid-delivery tube 124. The third sensor unit 184 may have a similar configuration and may perform a similar operation to the first sensor unit 180.

The fourth sensor unit 186 is arranged in the fourth liquid-delivery tube 134 and detects a state of the fluid in the fourth liquid-delivery tube 134. The fourth sensor unit 186 may detect at least one of a spectrum of light, a pressure, a flow speed, a flow volume, a pH, or a temperature of the fluid in the fourth liquid-delivery tube 134. The fourth sensor unit 186 may have a similar configuration and may perform a similar operation to the first sensor unit 180.

The fifth sensor unit 188 is arranged in the first reaction tube 142 and detects a state of the fluid in the first reaction tube 142. The fifth sensor unit 188 may be arranged immediately before the second mixer 150 and may be arranged, for example, at a position on the downstream side of the reaction portion in which the reaction in the first reaction tube 142 proceeds (that is, a position where the reaction in the first reaction tube 142 has completed). The fifth sensor unit 188 may detect at least one of a spectrum of light, a pressure, a flow speed, a flow volume, a pH, or a temperature of the fluid in the first reaction tube 142. The fifth sensor unit 188 may have a similar configuration and may perform a similar operation to the first sensor unit 180.

The sixth sensor unit 190, the seventh sensor unit 192, and the eighth sensor unit 194 are arranged in the second reaction tube 152 and detect a state of the fluid in the second reaction tube 152. The sixth sensor unit 190, the seventh sensor unit 192, and the eighth sensor unit 194 may each detect at least one of a spectrum of light, a pressure, a flow speed, a flow volume, a pH, or a temperature of the fluid in the second reaction tube 152. The sixth sensor unit 190, the seventh sensor unit 192 and the eighth sensor unit 194 may be arranged in different positions of the second reaction tube 152 and perform detection at the different positions of the second reaction tube 152. The sixth sensor unit 190, the seventh sensor unit 192, and the eighth sensor unit 194 may be arranged at three different positions on the downstream side of the reaction portion in which the reaction in the second reaction tube 152 proceeds (that is, the positions where the reaction in the second reaction tube 152 has completed), or may each be arranged in the reaction portion in which the reaction proceeds and on the downstream side of the reaction portion. The sixth sensor unit 190, the seventh sensor unit 192, and the eighth sensor unit 194 may each have a similar configuration and may perform a similar operation to the first sensor unit 180.

The ninth sensor unit 196 is arranged in the third reaction tube 162 and detects a state of the fluid in the third reaction tube 162. The ninth sensor unit 196 may be arranged at a position on the downstream side of the reaction portion in which the reaction in the third reaction tube 162 proceeds (that is, a position where the reaction in the third reaction tube 162 has completed). The ninth sensor unit 196 may detect at least one of a spectrum of light, a pressure, a flow speed, a flow volume, a pH, or a temperature of the fluid in the third reaction tube 162. The ninth sensor unit 196 may have a similar configuration and may perform a similar operation to the first sensor unit 180.

The tenth sensor unit 198 is arranged in the target substance tank 170 and detects a state of the target substance in the target substance tank 170. The tenth sensor unit 198 may detect a measured value indicating at least one of a spectrum of light, a pH, or a temperature of the target substance in the target substance tank 170. The tenth sensor unit 198 may have a similar configuration and may perform a similar operation to the first sensor unit 180.

The control apparatus 30 is connected to each component of the reaction apparatus 20. The control apparatus 30 may be a computer such as a PC, a tablet PC, a smartphone, a workstation, a server computer, or a general purpose computer, or may be a computer system in which a plurality of computers are connected. Such a computer system is also a computer in a broad sense. In addition, the control apparatus 30 may be implemented by one or more executable virtual computer environments in the computer. Alternatively, the control apparatus 30 may be a dedicated computer designed for a flow reactor or a dedicated hardware achieved by a dedicated circuit. In addition, the control apparatus 30 may be achieved by cloud computing.

The control apparatus 30 receives a measurement result indicating the state of the fluid in the flow channel of the reaction apparatus 20 from at least one of the first sensor unit 180, the second sensor unit 182, the third sensor unit 184, the fourth sensor unit 186, the fifth sensor unit 188, the sixth sensor unit 190, the seventh sensor unit 192, the eighth sensor unit 194, the ninth sensor unit 196, or the tenth sensor unit 198. The control apparatus 30 may predict the state of the fluid from the measurement result and control the reaction apparatus 20 according to the prediction result.

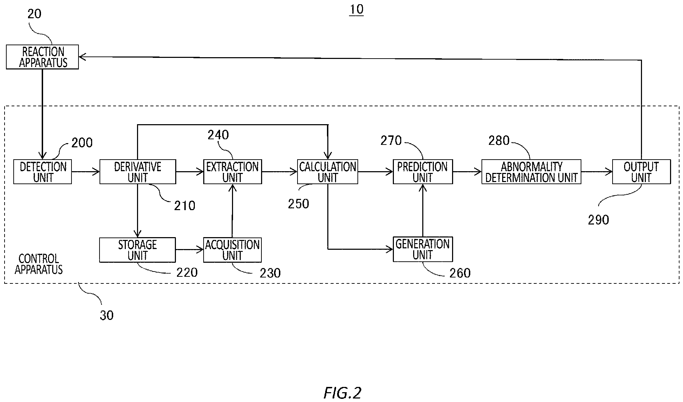

Fig. 2 shows a more detailed block diagram of the control apparatus 30. In the present embodiment, the control apparatus 30 extracts, from the fluid spectrum, a first solvent spectrum corresponding to the solvent of the fluid by principal component analysis or multivariate curve resolution-alternating least squares (MCR-ALS), and predicts the state of the fluid based on the fluid spectrum measured from the fluid and the first solvent spectrum. The control apparatus 30 uses, for prediction, a measurement result detected by a second-solvent-spectrum detection operation in which only the solvent is caused to flow into the flow channel and a measurement result detected by a reaction operation in which the solvent including the material is caused to flow into the flow channel in the reaction apparatus 20. The control apparatus 30 includes a detection unit 200, a derivative unit 210, a storage unit 220, an acquisition unit 230, an extraction unit 240, a calculation unit 250, a generation unit 260, a prediction unit 270, an abnormality determination unit 280 and an output unit 290.

The detection unit 200 is connected to the reaction apparatus 20. The detection unit 200 detects the fluid spectrum which is a spectrum of light indicating a state of the fluid flowing through the flow channel in the reaction operation. The detection unit 200 may receive the measurement result indicating the state of the fluid from at least one of the first sensor unit 180, the second sensor unit 182, the third sensor unit 184, the fourth sensor unit 186, the fifth sensor unit 188, the sixth sensor unit 190, the seventh sensor unit 192, the eighth sensor unit 194, the ninth sensor unit 196, or the tenth sensor unit 198. The detection unit 200 may calculate the fluid spectrum from the received measurement result or alternatively may receive the fluid spectrum calculated in the reaction apparatus 20. The detection unit 200 may detect, in the second-solvent-spectrum detection operation, the second solvent spectrum which is the spectrum of light indicating the state of the fluid including only the solvent, from at least one of the first sensor unit 180, the second sensor unit 182, the third sensor unit 184, the fourth sensor unit 186, the fifth sensor unit 188, the sixth sensor unit 190, the seventh sensor unit 192, the eighth sensor unit 194, the ninth sensor unit 196, or the tenth sensor unit 198 in a similar manner to the reaction operation.

The derivative unit 210 is connected to the detection unit 200. The derivative unit 210 performs, in the reaction operation, derivative of n-th order (n is a rational number) on the fluid spectrum to derive a derivative spectrum (in the following, a second-order derivative is described as an example). The derivative unit 210 may derive the derivative spectrum by performing the second-order derivative on the fluid spectrum detected by the detection unit 200. In the second-solvent-spectrum detection operation, the derivative unit 210 may second-order differentiate the second solvent spectrum in a similar manner to the reaction operation.

The storage unit 220 is connected to the derivative unit 210. The storage unit 220 may store the second solvent spectrum that corresponds to the solvent of the fluid. The storage unit 220 may store the second solvent spectrum obtained by the second-order derivative performed by the derivative unit 210 in the second-solvent-spectrum detection operation. The storage unit 220 may store a plurality of second solvent spectra respectively corresponding to a plurality of pHs or a plurality of temperatures.

The acquisition unit 230 is connected to the storage unit 220. The acquisition unit 230 acquires, in the reaction operation, the second solvent spectrum that corresponds to the solvent of the fluid. The acquisition unit 230 may acquire the second solvent spectrum which corresponds to the pH or the temperature of the fluid.

The extraction unit 240 is connected to the derivative unit 210 and the acquisition unit 230. The extraction unit 240 extracts, in the reaction operation, the first solvent spectrum by the principal component analysis for the solvent of the fluid. The extraction unit 240 may perform the principal component analysis by using the second solvent spectrum acquired by the acquisition unit 230, and extract the first solvent spectrum from the derivative spectrum derived by the derivative unit 210.

The calculation unit 250 is connected to the derivative unit 210 and the extraction unit 240. The calculation unit 250 calculates a difference spectrum between the derivative spectrum derived by the derivative unit 210 and the first solvent spectrum extracted by the extraction unit 240.

The generation unit 260 is connected to the calculation unit 250. The generation unit 260 generates, by using the difference spectrum, a state prediction model which predicts a state of the fluid in response to an input of data regarding a peak of the difference spectrum of the fluid. The generation unit 260 may generate, in a learning operation, the state prediction model from the relationship between the data regarding a peak of the difference spectrum calculated by the calculation unit 250 and the measurement result of the state of the fluid acquired by experiments or the like. The generation unit 260 may generate, in the learning operation, the state prediction model by using data regarding a peak of the difference spectrum for which the abnormality determination unit 280 has determined that there is no abnormality. The generation unit 260 may generate the state prediction model which predicts whether the reaction of the fluid is in an abnormal state, the residual amount of the material, or the production amount of the target substance of the reaction in response to an input of an intensity (absorbance or the like) of a peak of the difference spectrum or a wavenumber at which a peak of the difference spectrum has appeared or the like in a predetermined wavenumber range corresponding to the target substance of reaction or the material. In the difference spectrum of the fluid, a peak appears in the wavenumber range corresponding to the type of the target substance, and the larger the intensity of the peak, the more amount of the target substance is obtained. In addition, the generation unit 260 may generate the state prediction model which predicts at least one of a temperature, a pressure, or a material concentration of the fluid in response to an input of data regarding a peak of the difference spectrum calculated by the calculation unit 250. The generation unit 260 may generate the state prediction model by using PLS (partial least square), PCR (principal component regression), MLR (multivariable linear regression), or the like. Alternatively, the generation unit 260 may generate the state prediction model by using logistic regression, neural network, support vector machine, decision tree, change point detection, k-nearest neighbors, k-means clustering, or the like.

The prediction unit 270 is connected to the calculation unit 250 and the generation unit 260. The prediction unit 270 predicts a state of the fluid by using data regarding a peak of the difference spectrum calculated by the calculation unit 250. The prediction unit 270 may input the data regarding the peak of the difference spectrum into the state prediction model generated by the generation unit 260 to predict the state of the fluid. The prediction unit 270 may give, as the state of the fluid, at least one of a concentration of the target substance of reaction in the fluid, the presence or absence of production of the target substance, or the presence or absence of occurrence of a reaction abnormality, which are output in response to the input, into the state prediction model, of an intensity of a peak of the difference spectrum or a wavenumber at which a peak of the difference spectrum has appeared or the like in a predetermined wavenumber range corresponding to the target substance of reaction.

The abnormality determination unit 280 is connected to the prediction unit 270. The abnormality determination unit 280 determines whether a reaction abnormality has occurred in the reaction apparatus 20, based on the state of the fluid predicted by the prediction unit 270.

The output unit 290 is connected to the abnormality determination unit 280 and the reaction apparatus 20. The output unit 290 outputs control data to the reaction apparatus 20 according to the determination result in the abnormality determination unit 280. The output unit 290 may transmit display data to display the determination result in the abnormality determination unit 280 to an external display apparatus or the reaction apparatus 20.

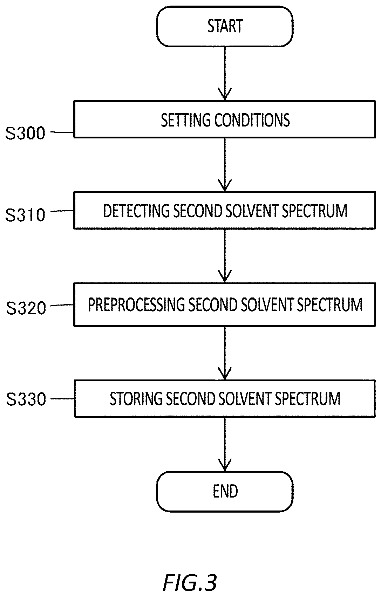

Fig. 3 shows an exemplary flow of the second-solvent-spectrum detection operation of the reaction system 10. In step S300, conditions (such as a flow volume, a flow speed, a pressure, a temperature, a type, or the like of the solvent in each flow channel) in the second-solvent-spectrum detection operation are set by a user input or the like. The conditions in the second-solvent-spectrum detection operation may be the same as the conditions in the reaction operation. Note that, the reaction apparatus 20 may supply only the solvent (as an example, organic solvents such as MTHP (4-methyl tetrahydropyran) or DMF (dimethylformamide), or water) to each flow channel of the first liquid-delivery tube 104, the second liquid-delivery tube 114, the third liquid-delivery tube 124, and the fourth liquid-delivery tube 134. The reaction apparatus 20 may supply the solvent that is the same as the one used in the reaction operation but without the material (such as amino acid) used in the reaction operation, to each flow channel by each of the first pump 102, the second pump 112, the third pump 122, and the fourth pump 132 under the set conditions.

In the second-solvent-spectrum detection operation, the reaction apparatus 20 may cause the solvent to flow into the flow channel at a plurality of temperatures in a predetermined temperature range or at a plurality of pHs in a predetermined pH range. By causing the solvent to flow into the flow channel while changing the temperature or the pH, the reaction apparatus 20 can detect a plurality of second solvent spectra respectively corresponding to the plurality of temperatures or the plurality of pHs in each flow channel of the first liquid-delivery tube 104, the second liquid-delivery tube 114, the third liquid-delivery tube 124, the fourth liquid-delivery tube 134, the first reaction tube 142, the second reaction tube 152, and the third reaction tube 162. The predetermined temperature range may be a control temperature range in which the fluid is controlled in the reaction operation. The reaction apparatus 20 may cause the solvent to flow into the flow channel so that the temperature of the solvent fluid becomes a set temperature ± α, a set temperature ± 2α ... and a set temperature ± nα (α > 0, n ≥ 2) for the fluid in the control temperature range. In addition, the predetermined pH range may be a control pH range in which the fluid is controlled in the reaction operation. The reaction apparatus 20 may cause the solvent to flow into the flow channel so that the pH of the solvent fluid becomes a set pH ± β, a set pH ± 2β ... and a set pH ± mβ (β > 0, m ≥ 2) for the fluid in the control pH range.

In step S310, the detection unit 200 receives, from the first sensor unit 180, the second sensor unit 182, the third sensor unit 184, the fourth sensor unit 186, the fifth sensor unit 188, the sixth sensor unit 190, the seventh sensor unit 192, the eighth sensor unit 194, the ninth sensor unit 196, and the tenth sensor unit 198, the second solvent spectrum that indicates the absorption spectrum of only the solvent flowing through the flow channel in which each of the sensor units is arranged. The detection unit 200 may receive, from the reaction apparatus 20 along with the second solvent spectrum, identification information of the sensor unit or the tube that has detected the second solvent spectrum.

As an example, the third sensor unit 184 guides an irradiation light having the ultraviolet region (10 to 380 nm), the visible region (380 nm to 800 nm), the near-infrared region (wavelength 800 nm to 2500 nm), or the infrared region (wavelength 2500 nm to 25000 nm) from the light source such as a semiconductor laser into the inside of the flow channel via light-guiding components such as an optical fiber, and irradiates the fluid therewith. The third sensor unit 184 guides the measurement light that has been transmitted through the inside of the flow channel to a light detector such as a photodiode via another light-guiding component, and detects, by the light detector, the absorption spectrum indicating the intensity, the amount of light absorption, or the like for each wavenumber (wavelength) of the measurement light. Each of the first sensor unit 180, the second sensor unit 182, the fourth sensor unit 186, the fifth sensor unit 188, the sixth sensor unit 190, the seventh sensor unit 192, the eighth sensor unit 194, the ninth sensor unit 196, and the tenth sensor unit 198 may detect the absorption spectrum in a similar manner to the third sensor unit 184. In addition, the tenth sensor unit 198 may detect the absorption spectrum by inserting the light-guiding component such as an optical fiber into the target substance tank and radiating the irradiation light to detect the measurement light.

The detection unit 200 may receive, from the sensor unit, the second solvent spectra measured under a plurality of conditions in each flow channel of the first liquid-delivery tube 104, the second liquid-delivery tube 114, the third liquid-delivery tube 124, the fourth liquid-delivery tube 134, the first reaction tube 142, the second reaction tube 152 and the third reaction tube 162. The detection unit 200 may receive, from the sensor unit, the second solvent spectrum for each temperature or for each pH (as an example, a theoretical value of pH). The detection unit 200 may receive, from the reaction apparatus 20, a set value of the temperature or the pH of the fluid corresponding to each second solvent spectrum. In addition, the detection unit 200 may receive, from the sensor unit, a set value of at least one of the temperature or the pH of the fluid flowing through each flow channel in the second-solvent-spectrum detection operation.

In step S320, the reaction apparatus 20 performs preprocessing on the second solvent spectrum. The reaction apparatus 20 may perform the same preprocessing on the second solvent spectrum as the preprocessing to be performed on the fluid spectrum in the reaction operation. The detection unit 200 may perform the preprocessing including median filtering, FFT filtering, and Savitzky-Golay smoothing, on the second solvent spectrum. The derivative unit 210 may second-order differentiate the second solvent spectrum.

In step S330, the storage unit 220 stores the second solvent spectrum for each flow channel in which it is detected or for each type of solvent. The storage unit 220 may store the second solvent spectrum in association with at least one of the temperature or the pH of the fluid in each flow channel. The storage unit 220 may store the set value or the measured value of the temperature of the fluid or may store the set value or the measured value of the pH of the fluid.

After storing the second solvent spectrum, the control apparatus 30 may end the second-solvent-spectrum detection operation and proceed to the reaction operation.

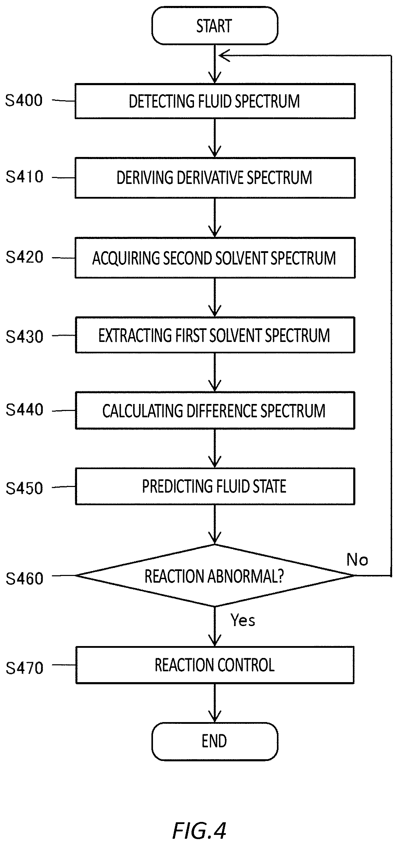

Fig. 4 shows an exemplary flow of the reaction operation of the reaction system 10. In the reaction operation in Fig. 4, as an example, the organic solvent including materials such as different amino acids is supplied from each of the first material tank 100, the second material tank 110, the third material tank 120, and the fourth material tank 130 to each flow channel in order to synthesize peptide in the reaction apparatus 20 shown in Fig. 1. (Hereinafter, in the reaction operation, the solvent including the material such as amino acid or the target substance flowing through each flow channel is also referred to as mixture fluid, and the mixture fluid represents the material fluid or the reaction fluid).

The reaction apparatus 20 starts the reaction according to the reaction conditions (such as a temperature, a flow volume, a flow speed, or a pressure of the fluid in the flow channel) set by a user. The reaction apparatus 20 operates the first pump 102, the second pump 112, the third pump 122, and the fourth pump 132 according to the set value (as an example, a discharge amount, a pressure, a rotational speed, or the like) set in the reaction conditions to cause each mixture fluid to flow into the flow channel.

In step S400, the detection unit 200 receives the measured value indicating the state of the flow channel through which the mixture fluid is flowing, from each of the first sensor unit 180, the second sensor unit 182, the third sensor unit 184, the fourth sensor unit 186, the fifth sensor unit 188, the sixth sensor unit 190, the seventh sensor unit 192, the eighth sensor unit 194, the ninth sensor unit 196, and the tenth sensor unit 198. The detection unit 200 detects the measured value indicating the fluid spectrum of the mixture fluid in the flow channel, from each of the first sensor unit 180, the second sensor unit 182, the third sensor unit 184, the fourth sensor unit 186, the fifth sensor unit 188, the sixth sensor unit 190, the seventh sensor unit 192, the eighth sensor unit 194, the ninth sensor unit 196, and the tenth sensor unit 198. As the fluid spectrum of the mixture fluid, each sensor unit may measure the absorption spectrum in a similar manner to step S310. Moreover, the detection unit 200 may receive at least one of a temperature, a flow volume or a pressure of the mixture fluid detected by each sensor unit. The detection unit 200 may receive, from the reaction apparatus 20 along with a measured value, identification information of the sensor unit or the tube that has detected the measured value.

The detection unit 200 may perform the preprocessing such as median filtering, FFT filtering, and Savitzky-Golay smoothing, on the fluid spectrum in a similar manner to step S320.

In step S410, the derivative unit 210 second-order differentiates the fluid spectrum detected by the detection unit 200 to derive the derivative spectrum. As an example, the derivative unit 210 can calculate the second-order derivative value x"(t) of the derivative spectrum at the wavenumber t by taking differences between the intensity x(t) of the fluid spectrum at the wavenumber t and the intensities x(t + w) and x(t - w) having ± w with reference to the wavenumber t, and dividing a difference between the values obtained by dividing the differences by a derivative interval h, by the derivative interval h (x"(t) = (x(t + w) + x(t - w) - 2x(t))/h²). The derivative unit 210 may calculate the second-order derivative value across the wavenumber range of the measured fluid spectrum to derive the derivative spectrum. Thus, the derivative unit 210 can clarify the change point of the fluid spectrum.

In step S420, the acquisition unit 230 acquires the second solvent spectrum that corresponds to the solvent of the mixture fluid. The acquisition unit 230 may acquire the second solvent spectrum for the solvent that is the same as the solvent in the mixture fluid (the solvent that is at least one of those of the same type or having the same mixing ratio). The acquisition unit 230 may acquire the second solvent spectrum that is detected in the same flow channel or by the same sensor unit as that detected the fluid spectrum, by using the identification information of the tube or the sensor unit. The acquisition unit 230 may acquire the second solvent spectrum which corresponds to the pH or the temperature of the mixture fluid among the plurality of second solvent spectra stored in the storage unit 220.

The acquisition unit 230 may estimate the pH or the temperature of the fluid and acquire the second solvent spectrum which corresponds to the estimated pH or temperature. For example, the acquisition unit 230 may estimate the pH or the temperature of the fluid based on the peak corresponding to water or the solvent in the fluid in the fluid spectrum, and acquire the second solvent spectrum which corresponds to the estimated pH or temperature. The acquisition unit 230 may estimate the pH or the temperature of the fluid from at least one of the occurrence wavenumber or the intensity of the peak corresponding to water or the organic solvent in a predetermined wavenumber range in the fluid spectrum. For example, the acquisition unit 230 may perform the estimation by using a table or a function indicating the relationship between at least one of the occurrence wavenumber or the intensity of the peak corresponding to water or the organic solvent in a predetermined wavenumber range and the pH or the temperature of the fluid. Alternatively, the acquisition unit 230 may perform the estimation of the pH or the temperature by using an estimation model which estimates the pH or the temperature of the fluid in response to an input of at least one of the occurrence wavenumber or the intensity of the peak corresponding to water or the organic solvent in a predetermined wavenumber range. The generation unit 260 may generate, in a learning operation, the estimation model by using at least one of the occurrence wavenumber or the intensity of the peak in a predetermined wavenumber range of the fluid spectrum obtained by experiments or the like, and the measurement results of the pH or the temperature of the fluid in a corresponding flow channel. The peak in the wavenumber range corresponding to water or the organic solvent in the spectrum of the fluid shifts by a shift amount which corresponds to the pH or the temperature. The generation unit 260 may generate the estimation model by using the logistic regression, neural network, support vector machine, decision tree, change point detection, k-nearest neighbors, k-means clustering, or the like. Note that, in a similar manner to a method performed on the fluid spectrum, the acquisition unit 230 may estimate the pH or the temperature of the fluid based on the peak corresponding to water or the organic solvent in the fluid in the derivative spectrum.

In addition, the acquisition unit 230 may acquire, from the storage unit 220, the second solvent spectrum according to the measured value of the temperature or the pH of the mixture fluid measured by the sensor unit that has detected the fluid spectrum in question.

The acquisition unit 230 may acquire the second solvent spectrum in which the peak has been corrected according to the pH or the temperature of the fluid. The acquisition unit 230 may receive, from the storage unit 220, and correct the second solvent spectrum corresponding to the solvent of the mixture fluid. If there is a peak shift corresponding to a difference between the pH or the temperature at the time of detection of the second solvent spectrum and the pH or the temperature (estimated value or measured value) of the fluid of the fluid spectrum, the acquisition unit may acquire a corrected second solvent spectrum by shifting at least one of the plurality of peaks of the second solvent spectrum by the shifted wavenumber. The acquisition unit 230 may shift all of the plurality of peaks of the second solvent spectrum by the same wavenumber or may shift the plurality of peaks of the second solvent spectrum by different wavenumbers. The larger the difference between the pHs or the temperatures, by the larger wavenumber the acquisition unit 230 may shift the peak of the second solvent spectrum. The acquisition unit 230 may determine the wavenumber to be shifted by using a table or a function indicating the relationship between the difference between the pH or the temperature at the time of detection of the second solvent spectrum and the pH or the temperature of the fluid of the fluid spectrum and the wavenumber to be shifted. The acquisition unit 230 may use the table or the function previously acquired by experiments or the like.

In step S430, the extraction unit 240 extracts the first solvent spectrum from the derivative spectrum by the principal component analysis. The extraction unit 240 may extract the first solvent spectrum from the derivative spectrum by using the second solvent spectrum in the same flow channel as the one in which the derivative spectrum was detected. For example, the extraction unit 240 may extract the first solvent spectrum from the derivative spectrum by the principal component analysis by using the second solvent spectrum detected by the same sensor unit as the sensor unit that detected the derivative spectrum or using the second solvent spectrum detected in the same tube as the tube (liquid-delivery tube or reaction tube) in which the derivative spectrum was detected.

As an example, the extraction unit 240 performs the principal component analysis on the intensity of each wavenumber in the second solvent spectrum and creates a principal component analysis model to calculate a principal component loading (loading) and a principal component score (score). The extraction unit 240 applies this principal component analysis model to the derivative spectrum to calculate the loading and the score corresponding to a principal component that is specific to the solvent of the mixture fluid (for example, a principal component having a sign of the loading that is the same as the sign of the second solvent spectrum, in a wavenumber range in which the absolute value of the score is the largest). The extraction unit 240 extracts the first solvent spectrum by reconfiguring it using the calculated loading and score.

In step S440, the calculation unit 250 calculates a difference spectrum between the derivative spectrum and the first solvent spectrum extracted from such derivative spectrum by the principal component analysis. The calculation unit 250 may calculate a difference between the value of the derivative spectrum and the value of the first solvent spectrum at any wavenumber in the wavenumber range of the measurement light. The calculation unit 250 can calculate a distribution of the difference spectrum by calculating the difference while changing the wavenumber across the wavenumber range of the measurement light.

If the detection unit 200 detects the fluid spectra at a plurality of positions in one flow channel (for example, the second reaction tube), the calculation unit 250 may calculate the difference spectrum between an average spectrum of the plurality of derivative spectra derived from the plurality of fluid spectra and the first solvent spectrum extracted from the average spectrum by the extraction unit. For example, the calculation unit 250 may calculate the difference spectrum by calculating the difference between a derivative spectrum derived from an average spectrum of the fluid spectra detected by the detection unit 200 from each of the sixth sensor unit 190, the seventh sensor unit 192, and the eighth sensor unit 194 arranged in the second reaction tube 152, and the first solvent spectrum extracted from such derivative spectrum. By using the average spectrum, the calculation unit 250 can reduce the influence of a detection error of the sensor unit on the difference spectrum.

In step S450, the prediction unit 270 predicts the state of the fluid by using data regarding the peak of the difference spectrum. The prediction unit 270 may predict a reaction amount (as an example, a concentration of the target substance, the presence or absence of the target substance, the residual amount of the material, or the like in the fluid) of the reaction in each of the first reaction tube, the second reaction tube, and the third reaction tube. The prediction unit 270 may predict an amount of the target substance in the fluid corresponding to the calculated difference spectrum, by using the state prediction model which outputs the amount of the target substance in response to an input of the value (as an example, the intensity of the peak or the wavenumber at which the peak appears) of the difference spectrum in the wavenumber range which corresponds to the target substance of reaction. The prediction unit 270 may use the state prediction model generated by the generation unit 260 or the state prediction model generated by an external learning apparatus. For example, the prediction unit 270 may input the intensity of the peak of the difference spectrum, calculated by the calculation unit 250, in the wavenumber range corresponding to the target substance of reaction in the second reaction tube 152 into the state prediction model to predict the concentration of the target substance generated by the reaction in the second reaction tube 152.

The prediction unit 270 may predict the reaction amount of the fluid by using the plurality of difference spectra in one flow channel. The prediction unit 270 may predict a plurality of reaction amounts from the plurality of difference spectra, respectively, and calculate the reaction rate from the plurality of reaction amounts. The prediction unit 270 may calculate the reaction rate by dividing the difference of the reaction amount between a plurality of measurement positions of the plurality of fluid spectra by an interval (length of the flow channel) between the corresponding measurement positions. For example, the prediction unit 270 may predict respective concentrations of the target substance generated by the reaction in the second reaction tube 152 from the state prediction model by using the fluid spectra acquired from the sixth sensor unit 190, the seventh sensor unit 192, or the eighth sensor unit 194. The prediction unit 270 may calculate the reaction rate by dividing the difference between the concentration of the target substance predicted from the fluid spectrum detected by the sixth sensor unit 190 and the concentration of the target substance predicted from the fluid spectrum detected by the seventh sensor unit 192, by the length of the flow channel between the arrangement position of the sixth sensor unit 190 and the arrangement position of the seventh sensor unit 192. Similarly, the prediction unit 270 may calculate the reaction rate by dividing the difference between the concentration of the target substance predicted from the fluid spectrum detected by the seventh sensor unit 192 and the concentration of the target substance predicted from the fluid spectrum detected by the eighth sensor unit 194, by the length of the flow channel between the arrangement position of the seventh sensor unit 192 and the arrangement position of the eighth sensor unit 194. In addition, the prediction unit 270 may calculate an average value of the predicted plurality of reaction amounts.

In addition, the prediction unit 270 may predict, by using the state prediction model, at least one of a temperature, a pressure, or a material concentration of the material fluid from the data regarding the peak of the difference spectrum for the material fluid flowing through each flow channel of the first liquid-delivery tube, the second liquid-delivery tube, and the third liquid-delivery tube.

In step S460, the abnormality determination unit 280 determines whether a reaction abnormality has occurred in the flow channel from the predicted state of the fluid. If the predicted reaction amount of the fluid is less than a predetermined threshold, the abnormality determination unit 280 may determine that the reaction abnormality has occurred. For example, if the residual amount of the material in the fluid predicted by the prediction unit 270 is less than a predetermined threshold (as an example, the residual amount is zero), the abnormality determination unit 280 may determine that the reaction of the fluid is proceeding (without the reaction abnormality). Alternatively, if the reaction rate calculated by the prediction unit 270 is less than a predetermined threshold, the abnormality determination unit 280 may determine that the reaction abnormality has occurred. Here, the predetermined threshold may be determined by a user or the like according to a theoretical value of the reaction amount of the fluid. Alternatively, if at least one of the temperature, the pressure, or the material concentration of the material fluid is out of a predetermined threshold range, the abnormality determination unit 280 may determine that the reaction abnormality has occurred. The predetermined threshold range may be determined by a user or the like according to a set value of the preset reaction conditions.

In addition, the control apparatus 30 may predict the state of the fluid for each flow channel in the reaction apparatus 20, and the abnormality determination unit 280 may identify the liquid-delivery tube or the reaction tube, among the plurality of liquid-delivery tubes and the plurality of reaction tubes, in which an abnormality of the state is indicated.

If the abnormality determination unit 280 determines the reaction abnormality (Yes in Fig. 4), the control apparatus 30 proceeds to step S470 whereas if the abnormality determination unit 280 determines no reaction abnormality (No in Fig. 4), the control apparatus 30 proceeds to step S400 for continuous reaction. In response to the determination by the abnormality determination unit 280 that there is no reaction abnormality in the upstream flow channel (as an example, the first reaction tube 142), the control apparatus 30 may control the third pump 122 to start driving so that the material is supplied from the third material tank 120 to the downstream flow channel (as an example, the second reaction tube 152).

In step S470, the output unit 290 may transmit, to the reaction apparatus 20, the display data to display that the reaction abnormality has occurred. For example, the output unit 290 may transmit. to the reaction apparatus 20, the display data showing the liquid-delivery tube or the reaction tube in which the abnormality of the state is indicated among the plurality of liquid-delivery tubes and the plurality of reaction tubes. In addition, the output unit 290 may transmit, to the reaction apparatus 20, the control data to stop the reaction operation in the reaction apparatus 20.

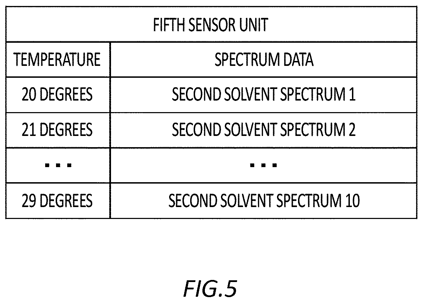

Fig. 5 shows an exemplary database that stores the second solvent spectrum. The database is stored in the storage unit 220. The database stores, in association with the identification information of the sensor unit, the spectrum data of the second solvent spectrum corresponding to a plurality of temperatures. As an example, the database in Fig. 5 stores the second solvent spectrum 1 at the temperature of 20 degrees, the second solvent spectrum 2 at the temperature of 21 degrees, ..., and the second solvent spectrum 10 at the temperature of 29 degrees detected by the fifth sensor unit 188. The spectrum data indicates the distribution of absorbance in the wavenumber range of the measurement light obtained by the second-order derivative performed by the derivative unit 210 in the second-solvent-spectrum detection operation.

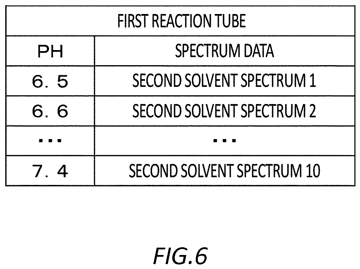

Fig. 6 shows another exemplary database that stores the second solvent spectrum. The database stores, in association with the identification information of the tube, the spectrum data of the second solvent spectrum corresponding to a plurality of pHs. As an example, the database in Fig. 6 stores the second solvent spectrum 1 at the pH of 6.5, the second solvent spectrum 2 at the pH of 6.6, ..., and the second solvent spectrum 10 at the pH of 7.4 detected in the first reaction tube 142. The spectrum data indicates the distribution of absorbance in the wavenumber range of the measurement light obtained by the second-order derivative performed by the derivative unit 210 in the second-solvent-spectrum detection operation.

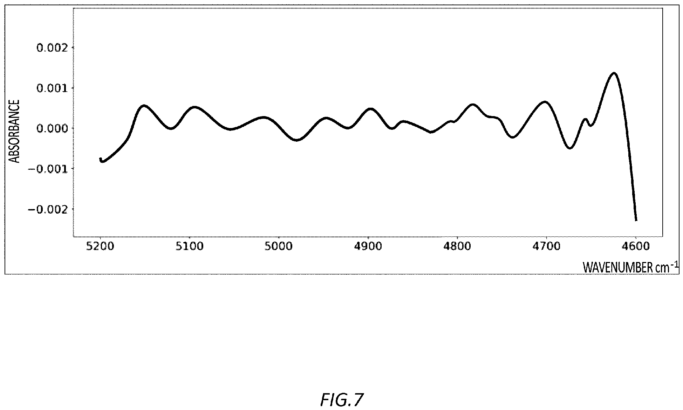

Fig. 7 shows a descriptive drawing of an exemplary derivative spectrum. As an example, Fig. 7 shows the derivative spectrum obtained by second-order differentiating the absorption spectrum measured by the fifth sensor unit 188, with the horizontal axis showing the wavenumber and the vertical axis showing the absorbance. The fifth sensor unit 188 can irradiate the first reaction fluid flowing through the flow channel in the first reaction tube 142 with the irradiation light, detect the measurement light transmitted through the fluid, and measure the absorbance of the measurement light at each wavenumber. The derivative spectrum has a plurality of peaks originating from the material and solvent such as amino acid in the first reaction fluid.

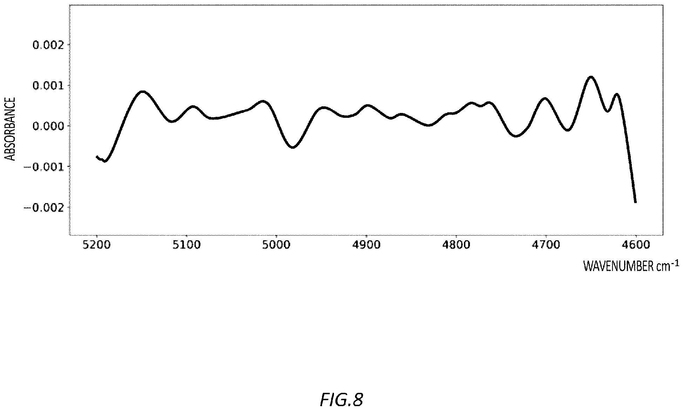

Fig. 8 shows a descriptive drawing of an exemplary first solvent spectrum. As an example, Fig. 8 shows the first solvent spectrum extracted from the derivative spectrum in Fig. 7 by the extraction unit 240, with the horizontal axis showing the wavenumber and the vertical axis showing the absorbance. The second solvent spectrum for extracting the first solvent spectrum in Fig. 8 is acquired in the second-solvent-spectrum detection operation by the fifth sensor unit 188 irradiating a fluid including only the solvent flowing through the flow channel in the first reaction tube 142 with the irradiation light, detecting the measurement light transmitted through the fluid, and measuring the absorbance of the measurement light at each wavenumber. The first solvent spectrum has a plurality of peaks originating from the solvent.

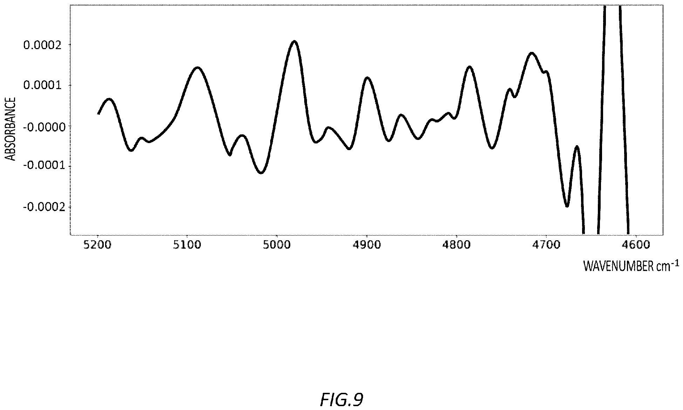

Fig. 9 shows a descriptive drawing of an exemplary difference spectrum. As an example, Fig. 9 shows the difference spectrum between the derivative spectrum in Fig. 7 and the first solvent spectrum in Fig. 8, with the horizontal axis showing the wavenumber and the vertical axis showing the absorbance. The calculation unit 250 can calculate the difference of absorbance between the derivative spectrum and the first solvent spectrum at each wavenumber to calculate the difference spectrum in the wavenumber range of the measurement light as shown in Fig. 9. As shown in Fig. 9, in the difference spectrum, the solvent component is removed and the peaks originating from the material or the target substance are clarified.

According to the present embodiment, by using the difference spectrum between the first solvent spectrum extracted by the principal component analysis and the derivative spectrum of the fluid for state prediction of the fluid, it is possible to remove the influence, on the state prediction, of the concentration variation of the solvent caused by the variation in the flow speed, the temperature, or the like of the fluid. Thus, the control apparatus 30 can precisely predict the state of the fluid.

Note that, the fluid spectrum, the derivative spectrum, the first solvent spectrum, the second solvent spectrum, and the difference spectrum may be the distribution of the intensity (such as the absorbance) of the measurement light in the wavenumber range, or may be the intensity (such as the absorbance) of the measurement light at the predetermined one wavenumber.

Various embodiments of the present invention may be described with reference to flowcharts and block diagrams whose blocks may represent (1) steps of processes in which operations are performed or (2) sections of apparatuses responsible for performing operations. Certain stages and sections may be implemented by dedicated circuit, programmable circuit supplied together with computer readable instructions stored on computer readable media, and/or processors supplied together with computer readable instructions stored on computer readable media. Dedicated circuit may include digital and/or analog hardware circuits, and may include integrated circuits (IC) and/or discrete circuits. The programmable circuit may include a reconfigurable hardware circuit including logical AND, logical OR, logical XOR, logical NAND, logical NOR, and other logical operations, a memory element or the like such as a flip-flop, a register, a field programmable gate array (FPGA) and a programmable logic array (PLA), or the like.

A computer readable medium may include any tangible device that can store instructions to be executed by a suitable device, and as a result, the computer readable medium having instructions stored thereon includes a product including instructions that can be executed in order to create means for executing operations designated in the flowcharts or block diagrams. Examples of the computer readable medium may include an electronic storage medium, a magnetic storage medium, an optical storage medium, an electromagnetic storage medium, a semiconductor storage medium, and the like. More specific examples of the computer readable medium may include a floppy (registered trademark) disk, a diskette, a hard disk, a random access memory (RAM), a read-only memory (ROM), an erasable programmable read-only memory (EPROM or flash memory), an electrically erasable programmable read-only memory (EEPROM), a static random access memory (SRAM), a compact disc read-only memory (CD-ROM), a digital versatile disk (DVD), a Blu-ray (registered trademark) disk, a memory stick, an integrated circuit card, and the like.

The computer readable instruction may include: an assembler instruction, an instruction-set-architecture (ISA) instruction; a machine instruction; a machine dependent instruction; a microcode; a firmware instruction; state-setting data; or either a source code or an object code described in any combination of one or more programming languages, including an object oriented programming language such as Smalltalk (registered trademark), JAVA (registered trademark), C++, or the like, and a conventional procedural programming language such as a "C" programming language or a similar programming language.

The computer readable instructions may be provided for a processor or programmable circuit of a general purpose computer, special purpose computer, or other programmable data processing apparatuses such as a computer locally or via a wide area network (WAN) such as a local area network (LAN), the Internet, or the like, and execute the computer readable instructions in order to create means for executing the operations designated in flowcharts or block diagrams. Examples of the processor include a computer processor, a processing unit, a microprocessor, a digital signal processor, a controller, a microcontroller, and the like.

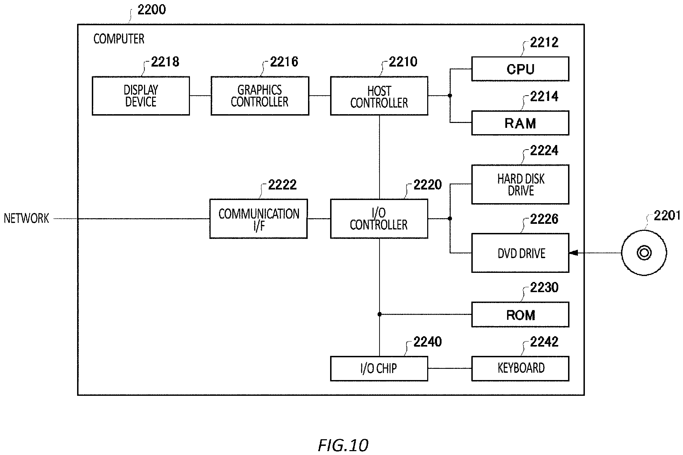

Fig. 10 shows an exemplary computer 2200 in which a plurality of aspects of the present invention may be embodied in whole or in part. A program installed in the computer 2200 can cause the computer 2200 to function as an operation associated with the apparatuses according to the embodiments of the present invention or as one or more sections of the apparatuses, or can cause the operation or the one or more sections to be executed, and/or can cause the computer 2200 to execute a process according to the embodiments of the present invention or a step of the process. Such programs may be executed by a CPU 2212 to cause the computer 2200 to perform specific operations associated with some or all of the blocks in the flowcharts and block diagrams described in the present specification.

The computer 2200 according to the present embodiment includes the CPU 2212, an RAM 2214, a graphics controller 2216, and a display device 2218, which are interconnected by a host controller 2210. The computer 2200 also includes input/output units such as a communication interface 2222, a hard disk drive 2224, a DVD-ROM drive 2226, and an IC card drive, which are connected to the host controller 2210 via an input/output controller 2220. The computer also includes legacy input/output units such as an ROM 2230 and a keyboard 2242, which are connected to the input/output controller 2220 via an input/output chip 2240.

The CPU 2212 operates according to programs stored in the ROM 2230 and the RAM 2214, thereby controlling each unit. The graphics controller 2216 acquires image data generated by the CPU 2212 in a frame buffer or the like provided in the RAM 2214 or in itself, such that the image data is displayed on the display device 2218.

The communication interface 2222 communicates with other electronic devices via a network. The hard disk drive 2224 stores programs and data used by the CPU 2212 in the computer 2200. The DVD-ROM drive 2226 reads a program or data from a DVD-ROM 2201 and provides the program or data to the hard disk drive 2224 via the RAM 2214. The IC card drive reads the programs and the data from the IC card, and/or writes the programs and the data to the IC card.

The ROM 2230 stores therein boot programs and the like executed by the computer 2200 at the time of activation, and/or programs that depend on the hardware of the computer 2200. The input/output chip 2240 may also connect various input/output units to the input/output controller 2220 via a parallel port, a serial port, a keyboard port, a mouse port, or the like.

Programs are provided by a computer readable medium such as the DVD-ROM 2201 or the IC card. The programs are read from the computer readable medium, are installed in the hard disk drive 2224, the RAM 2214, or the ROM 2230 which is also an example of the computer readable medium, and are executed by the CPU 2212. The information processing described in these programs is read by the computer 2200, and provides cooperation between the programs and the various types of hardware resources. The apparatus or method may be configured by implementing operations or processing of information according to use of the computer 2200.

For example, in a case where communication is performed between the computer 2200 and an external device, the CPU 2212 may execute a communication program loaded in the RAM 2214 and instruct the communication interface 2222 to perform communication processing based on processing described in the communication program. Under the control of the CPU 2212, the communication interface 2222 reads transmission data stored in a transmission buffer processing region provided in a recording medium such as the RAM 2214, the hard disk drive 2224, the DVD-ROM 2201, or the IC card, transmits the read transmission data to the network, or writes reception data received from the network in a reception buffer processing region or the like provided on the recording medium.

In addition, the CPU 2212 may cause the RAM 2214 to read all or a necessary part of a file or database stored in an external recording medium such as the hard disk drive 2224, the DVD-ROM drive 2226 (DVD-ROM 2201), the IC card, or the like, and may execute various types of processing on data on the RAM 2214. Then, the CPU 2212 writes the processed data back in the external recording medium.

Various types of information such as various types of programs, data, tables, and databases may be stored in a recording medium and subjected to information processing. The CPU 2212 may execute, on the data read from the RAM 2214, various types of processing including various types of operations, information processing, conditional judgement, conditional branching, unconditional branching, information retrieval/replacement, or the like described throughout the present disclosure and specified by instruction sequences of the programs, and writes the results back to the RAM 2214. In addition, the CPU 2212 may retrieve information in a file, a database, or the like in the recording medium. For example, when a plurality of entries, each having an attribute value of a first attribute associated with an attribute value of a second attribute, is stored in the recording medium, the CPU 2212 may retrieve, out of the plurality of entries, an entry with the attribute value of the first attribute specified that meets a condition, read the attribute value of the second attribute stored in said entry, and thereby acquiring the attribute value of the second attribute associated with the first attribute meeting a predetermined condition.

The programs or software modules described above may be stored in a computer readable medium on or near the computer 2200. In addition, a recording medium such as a hard disk or a RAM provided in a server system connected to a dedicated communication network or the Internet can be used as a computer readable medium, thereby providing a program to the computer 2200 via the network.

While the present invention has been described with the embodiments, the technical scope of the present invention is not limited to the above-described embodiments. It is apparent to persons skilled in the art that various alterations and improvements can be added to the above-described embodiments. It is also apparent from the description of the claims that the form to which such alterations or improvements are made can be included in the technical scope of the present invention.

It should be noted that the operations, procedures, steps, stages, and the like of each process performed by an apparatus, system, program, and method shown in the claims, the specification, or the drawings can be realized in any order as long as the order is not indicated by "prior to," "before," or the like and as long as the output from a previous process is not used in a later process. Even if the operation flow is described by using phrases such as "first" or "next" for the sake of convenience in the claims, specification, and drawings, it does not necessarily mean that the process must be performed in this order.

### EXPLANATION OF REFERENCES

10: reaction system;
20: reaction apparatus;
30: control apparatus;
100: first material tank;
102: first pump;
104: first liquid-delivery tube;
110: second material tank;
112: second pump;
114: second liquid-delivery tube;
120: third material tank;
122: third pump;
124: third liquid-delivery tube;
130: fourth material tank;
132: fourth pump;
134: fourth liquid-delivery tube;
140: first mixer;
142: first reaction tube;
150: second mixer;
152: second reaction tube;
160: third mixer;
162: third reaction tube;
170: target substance tank;
180: first sensor unit;
182: second sensor unit;
184: third sensor unit;
186: fourth sensor unit;
188: fifth sensor unit;
190: sixth sensor unit;
192: seventh sensor unit;
194: eighth sensor unit;
196: ninth sensor unit;
198: tenth sensor unit;
200: detection unit;
210: derivative unit;
220: storage unit;
230: acquisition unit;
240: extraction unit;
250: calculation unit;
260: generation unit;
270: prediction unit;
280: abnormality determination unit;
290: output unit;
2200: computer;
2201: DVD-ROM;
2210: host controller;
2212: CPU;
2214: RAM;
2216: graphics controller;
2218: display device;
2220: input/output controller;
2222: communication interface;
2224: hard disk drive;
2226: DVD-ROM drive;
2230: ROM;
2240: input/output chip;
2242: keyboard.

## Claims

1. An apparatus, comprising:
a detection unit that detects a fluid spectrum which is a spectrum of light indicating a state of a fluid flowing through a flow channel;
a derivative unit that differentiates the fluid spectrum to derive a derivative spectrum;
an extraction unit that extracts a first solvent spectrum by principal component analysis for a solvent of the fluid;
a calculation unit that calculates a difference spectrum between the derivative spectrum and the first solvent spectrum; and
a prediction unit that predicts a state of the fluid by using data regarding a peak of the difference spectrum calculated by the calculation unit.

2. The apparatus according to claim 1, further comprising:
a generation unit that generates, by using the difference spectrum, a model which predicts a state of a fluid in response to an input of data regarding a peak of a difference spectrum of the fluid, wherein
the prediction unit inputs data regarding a peak of the difference spectrum into the model to predict a state of the fluid.

3. The apparatus according to claim 1 or 2, comprising:
an acquisition unit that acquires a second solvent spectrum corresponding to the solvent, wherein
the extraction unit extracts the first solvent spectrum from the derivative spectrum by the principal component analysis by using the second solvent spectrum.

4. The apparatus according to claim 3, wherein
the acquisition unit acquires the second solvent spectrum which corresponds to a pH or a temperature of the fluid, and
the extraction unit extracts the first solvent spectrum from the derivative spectrum by the principal component analysis by using the second solvent spectrum.

5. The apparatus according to claim 4, wherein
the acquisition unit estimates a pH or a temperature of the fluid and acquires the second solvent spectrum which corresponds to the pH or the temperature estimated.

6. The apparatus according to claim 5, wherein
the acquisition unit estimates a pH or a temperature of the fluid based on a peak corresponding to water or a solvent in the fluid in the fluid spectrum and acquires the second solvent spectrum which corresponds to the pH or the temperature estimated.

7. The apparatus according to any one of claims 3 to 6, further comprising:
a storage unit that stores a plurality of second solvent spectra respectively corresponding to a plurality of pHs or a plurality of temperatures, wherein
the acquisition unit acquires, from the storage unit, the second solvent spectrum which corresponds to a pH or a temperature of the fluid among the plurality of second solvent spectra.

8. The apparatus according to claim 4, wherein
the acquisition unit acquires the second solvent spectrum in which a peak has been corrected according to a pH or a temperature of the fluid.

9. The apparatus according to any one of claims 1 to 8, wherein
the prediction unit predicts, as a state of the fluid, a reaction amount of a reaction in the fluid by using data regarding a peak of the difference spectrum.

10. The apparatus according to claim 9, wherein
the prediction unit predicts a residual amount of a material in the fluid by using data regarding a peak of the difference spectrum.

11. The apparatus according to claim 10, further comprising:
an abnormality determination unit that determines that a reaction of the fluid is proceeding, if the residual amount of the material in the fluid predicted by the prediction unit is less than a predetermined threshold.

12. A method, comprising:
detecting a fluid spectrum which is a spectrum of light indicating a state of a fluid flowing through a flow channel;
differentiating the fluid spectrum to derive a derivative spectrum;
extracting a first solvent spectrum by principal component analysis for a solvent of the fluid;
calculating a difference spectrum between the derivative spectrum and the first solvent spectrum; and
predicting a state of the fluid by using data regarding a peak of the difference spectrum calculated.

13. A program which is executed by a computer and causes the computer to function as:
a detection unit that detects a fluid spectrum which is a spectrum of light indicating a state of a fluid flowing through a flow channel;
a derivative unit that differentiates the fluid spectrum to derive a derivative spectrum;
an extraction unit that extracts a first solvent spectrum by principal component analysis for a solvent of the fluid;
a calculation unit that calculates a difference spectrum between the derivative spectrum and the first solvent spectrum; and
a prediction unit that predicts a state of the fluid by using data regarding a peak of the difference spectrum calculated.
